Europäisches Patentamt

(19) European Patent Office

Office européen des brevets

(11) Veröffentlichungsnummer: **0 075 321**
**B1**

(12) **EUROPÄISCHE PATENTSCHRIFT**

(45) Veröffentlichungstag der Patentschrift:
02.01.85

(51) Int. Cl.³: **B 23 B 29/24**

(21) Anmeldenummer: **82108712.9**

(22) Anmeldetag: **21.09.82**

(54) **Trommelrevolverscheibe für Drehmaschinen.**

(30) Priorität: **21.09.81 DE 3137514**

(43) Veröffentlichungstag der Anmeldung:
**30.03.83 Patentblatt 83/13**

(45) Bekanntmachung des Hinweises auf die Patenterteilung:
**02.01.85 Patentblatt 85/1**

(84) Benannte Vertragsstaaten:
**CH DE FR GB LI SE**

(56) Entgegenhaltungen:
**EP - A - 0 019 654**
**DE - A - 2 737 325**

**TECHNISCHE RUNDSCHAU, Band 68, Nr. 46, November 1976, Hallwag Verlag, Bern, CH. "WEllen- und Futterteile wechselseitig bearbeiten"**
**TOOLING & PRODUCTION, Band 44, Nr. 6, September 1978, Hueber Publ. Inc., Solon, USA, "The american eagle 2000"**
**WERKSTATT UND BETRIEB, Band 114, Nr. 2, Februar 1981, Carl Hanser Verlag, München, DE. "Meisterwerk"**

(73) Patentinhaber: **Oerlikon-Boehringer GmbH, Stuttgarter Strasse 50 Postfach 220, D-7320 Göppingen (DE)**

(72) Erfinder: **Gloser, Wolfgang, Blumenstrasse 22, D-7321 Börtlingen (DE)**
Erfinder: **Kuhn, Siegfried, Kornbergstrasse 28/1, D-7321 Dürnau (DE)**
Erfinder: **Räder, Robert, St.-Galler-Strasse 17, D-7320 Güppingen-Faurndau (DE)**
Erfinder: **Setzer, Friedhelm, Nördliche Ringstrasse 6, D-7320 Göppingen (DE)**

(74) Vertreter: **Vogeser, Werner, Dipl.-Ing. et al, Patentanwälte Hansmann & Vogeser Albert-Rosshaupter-Strasse 65, D-8000 München 70 (DE)**

## Beschreibung

Die Erfindung betrifft eine Trommelrevolverscheibe für Drehmaschinen entsprechend dem Oberbegriff des Anspruchs 1.

Es ist bekannt, bei derartigen Trommelrevolverscheiben Außen- und Innendrehmeißel mit gleichem Winkelabstand anzuordnen. Der Winkelabstand zwischen den Meißeln wird dabei von dem sogenannten kollisionsfreien Durchmesser zwischen zwei Innendrehmeißeln bestimmt. Dieser Durchmesser ist gleich dem Durchmesser des größtmöglichen Werkstückes, das bearbeitet werden kann, ohne daß eine Kollision mit dem Werkstück erfolgt.

Es ist bekannt, z. B. aus der EP-A-0 019 654, bei derartigen Trommelrevolverscheiben die Innen- und Außendrehmeißel auf zwei Bezugskreisen anzuordnen. Dabei liegen die Spitzen der Außendrehmeißel auf dem einen und die Mitten der Innendrehmeißel auf dem anderen Bezugskreis.

Bei einer Erhöhung der Anzahl der Werkzeuge muß zwangsläufig der Durchmesser der Revolverscheibe erhöht werden. Eine Erhöhung des Scheibendurchmessers führt zu Schwierigkeiten wegen der umliegenden Baugruppen.

Der Erfindung liegt die Aufgabe zugrunde, die Trommelrevolverscheibe der eingangs genannten Art so auszubilden, daß bei möglichst geringem Durchmesser eine möglichst große Anzahl von Werkzeugen aufgenommen werden kann.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

Die Aufteilung der Außen- und Innendrehmeißel in der angegebenen Weise auf wenigstens drei Bezugskreise ergibt eine äußerst kompakte Anordnung, bei der die Werkzeuge zwar nicht gleichen Winkelabstand untereinander haben, was jedoch bei einer numerisch gesteuerten Werkzeugmaschine nicht von Nachteil ist, jedoch der Durchmesser der Trommelrevolverscheibe gegenüber einer üblichen bei gleicher Anzahl der Werkzeuge erheblich reduziert ist.

Die Anordnung der Werkzeuge kann selbstverständlich auch auf mehr als drei Bezugskreisen erfolgen, wobei die Außendrehmeißel auf dem äußersten Bezugskreis zu liegen kommen. Durch entsprechend ausgebildete Werkzeughalter ist es auch möglich, Außendrehmeißel an solchen Stellen anzuordnen, an denen normalerweise Innendrehmeißel angeordnet sind.

Um die Gesamtbauhöhe der Drehmaschine möglichst niedrig zu halten, kann es erforderlich sein, den Drehmittelpunkt der Trommelrevolverscheibe in Z-Richtung gegenüber der Drehachse der Drehmaschine gegenüber der Normallage nach unten zu versetzen. In diesem Falle müssen die Außendrehmeißel entsprechend gegenüber der normalen Radiallage geneigt sein, damit sie sich in der Arbeitsstellung wieder in der Normallage befinden.

Die Erfindung wird nachstehend anhand der Fig. 1—4 beispielsweise erläutert. Es zeigt

Fig. 1 und 2 bekannte Trommelrevolverscheiben,

Fig. 3 die erfindungsgemäße Trommelrevolverscheibe und

Fig. 4 eine Abwandlung der Ausführungsform der Fig. 3.

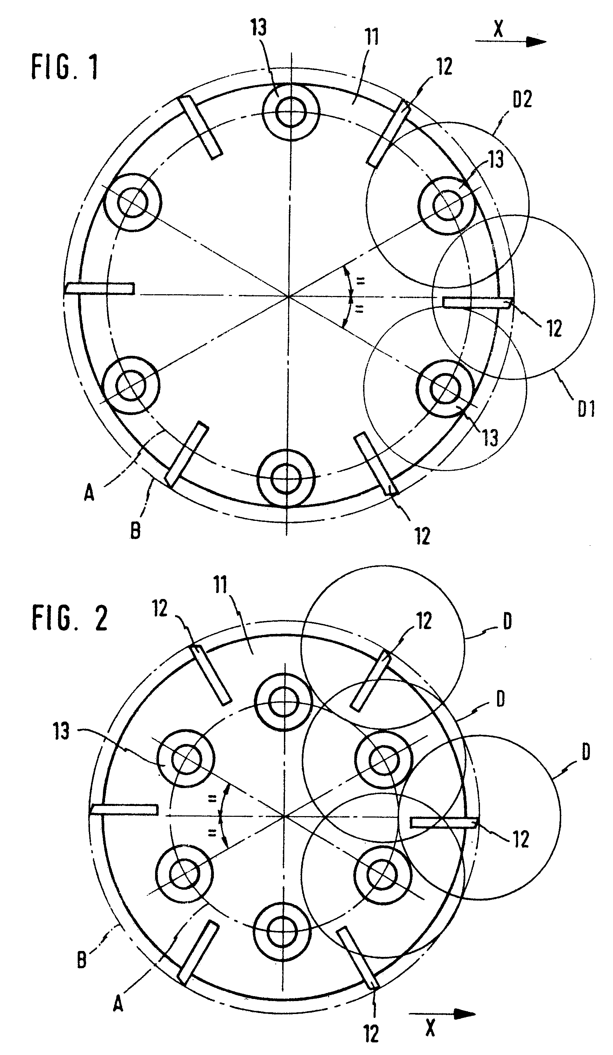

Bei der Trommelrevolverscheibe 11 in Fig. 1 sind die Außendrehmeißel 12 und die Innendrehmeißel 13 abwechselnd und winkelabstandsgleich angeordnet. Der Winkelabstand zwischen zwei Meißeln ergibt sich dabei aus dem Winkelabstand zwischen der Spitze eines Außendrehmeißels 12 und der Mitte eines Innendrehmeißels 13.

Zwischen zwei Innendrehmeißeln 13 und dem dazwischenliegenden Außendrehmeißel 12 muß ein Abstand eingehalten sein, der dem kollisionsfreien Durchmesser entspricht, der gleich dem größtmöglichen Durchmesser eines Werkstückes ist, das ohne Kollision mit den nächstliegenden Drehmeißeln bearbeitet werden kann. In Fig. 1 ist dieser kollisionsfreie Durchmesser mit D1 bezeichnet. Wie der gleiche kollisionsfreie Durchmesser D2 um einen Innendrehmeißel 13 zeigt, ist der Abstand zwischen den Innendrehmeißeln 13 größer als erforderlich, so daß sich ein großer Scheibendurchmesser ergibt. Die Mitten der Innendrehmeißel 13 und die Spitzen der Außendrehmeißel 12 liegen bei dieser Trommelrevolverscheibe auf unterschiedlichen Bezugskreisen A und B.

Fig. 2 zeigt eine weitere bekannte Ausführungsform, bei der zur Reduzierung des Scheibendurchmessers die Innendrehmeißel 13 gegenüber der Ausführungsform der Fig. 1 nach innen versetzt sind. Die Außen- und Innendrehmeißel 12 bzw. 13 liegen auch bei dieser Ausführungsform auf zwei unterschiedlichen Bezugskreisen A und B.

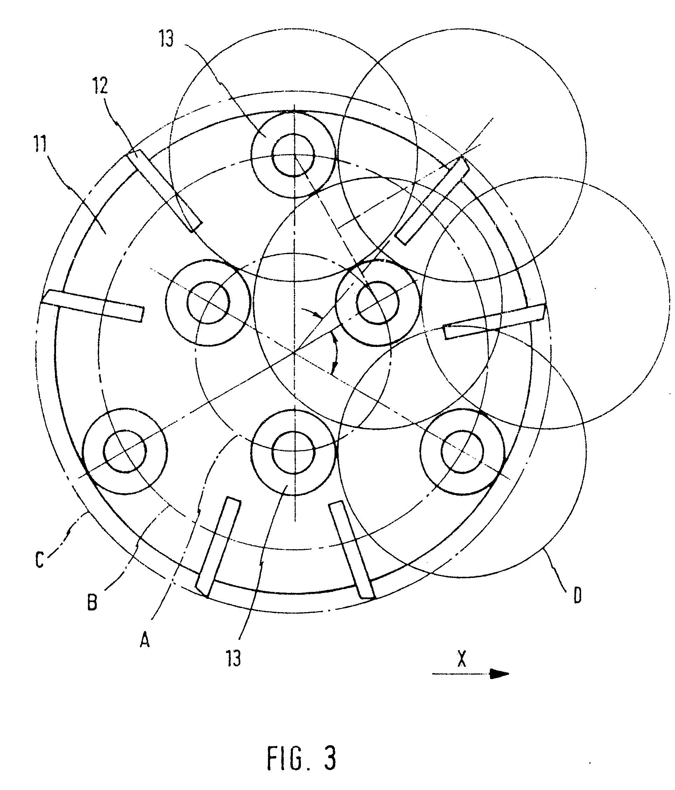

Fig. 3 zeigt eine erfindungsgemäße Ausführungsform der Trommelrevolverscheibe. Bei dieser Scheibe 11 liegen die Drehmeißel auf drei unterschiedlichen Bezugskreisen A bis C. Auf dem inneren Bezugskreis A liegen die Mitten dreier Innendrehmeißel 13 unter Einhaltung des kollisionsfreien Durchmessers D. Bei dieser Ausführungsform liegen auf dem inneren Teilkreis A drei Innendrehmeißel 13. Die Lage der weiteren Innendrehmeißel 13 auf dem mittleren Bezugskreis ergibt sich wiederum durch die Einhaltung des kollisionsfreien Durchmessers D. Der Mittelpunkt des dem kollisionsfreien Durchmesser entsprechenden Kreises, der die Größe des mittleren Bezugskreises B bestimmt, liegt auf der Senkrechten zur Verbindungslinie zweier Innendrehmeißel 13, die auf dem inneren Bezugskreis A liegen. Die Lage der übrigen Innendrehmeißel auf dem mittleren Bezugskreis ergibt sich in der gleichen Weise.

Die Lage der Außendrehmeißel 12 auf dem äußeren Bezugskreis C ergibt sich wiederum durch die Einhaltung des kollisionsfreien Durchmessers D, der jeweils zwei benachbarte Innendrehmeißel 13 berührt, von denen der eine auf dem inneren Bezugskreis A und der andere auf dem mittleren Bezugskreis B liegt. Die Meißelspitze liegt somit auf der Senkrechten zur Verbindungslinie dieser beiden Innendrehmeißel 13.

Die Lage der Außendrehmeißel 12 auf dem äußeren Bezugskreis C ergibt sich wiederum durch die Einhaltung des kollisionsfreien Durchmessers D, der jeweils zwei benachbarte Innendrehmeißel 13 berührt, von denen der eine auf dem inneren Bezugskreis A und der andere auf dem mittleren Bezugskreis B liegt. Die Meißelspitze liegt somit auf der Senkrechten zur Verbindungslinie dieser beiden Innendrehmeißel 13.

Ein Vergleich mit den bekannten Trommelrevolverscheiben der Fig. 1 und 2 zeigt, daß die Trommelrevolverscheibe der Erfindung entsprechend Fig. 3 einen geringeren Durchmesser hat. Die Zustellgröße in X-Richtung, die sich beim Übergang auf Werkzeuge eines anderen Bezugskreises ergibt, ist aufgrund des geringen Scheibendurchmessers relativ gering. Der Abstand der Außendrehmeißel zu dem nächstliegenden Innendrehmeißel ist bei dieser Ausführungsform zwar nicht gleich, da sich bei allen Werkzeugen in Umfangsrichtung gesehen eine ungleiche Teilung ergibt, jedoch ist die unterschiedliche Drehbewegung, die erforderlich ist, um die Werkzeuge in die Arbeitslage zu bringen, bei numerisch gesteuerten Werkzeugmaschinen ohne Bedeutung.

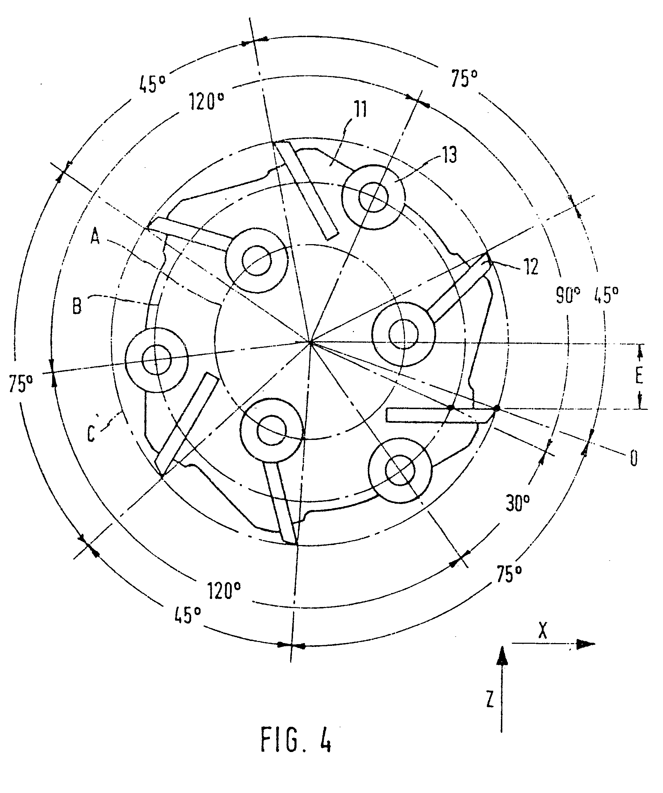

Fig. 4 zeigt eine weitere Ausführungsform der Trommelrevolverscheibe der Erfindung. Bei dieser ist die Lage der Außendrehmeißel gegenüber der normalen Radiallage geneigt. Diese Neigung ist durch die Strecke E bestimmt, die sich ergibt, wenn die Drehmitte der Revolverscheibe in der Werkzeugmaschine gegenüber der Drehachse der Maschine in Z-Richtung nach unten versetzt ist, um eine möglichst geringe Bauhöhe der Maschine zu erreichen. Wie Fig. 4 zeigt, besteht zwischen der Spitze des in horizontaler Arbeitslage befindlichen Außendrehmeißels und der Revolverscheibenmitte in Z-Richtung ein Abstand E, durch den die Lage des Meißels gegenüber der Radiallage O bestimmt ist.

Bei der Ausführungsform der Fig. 4, die wie die der Fig. 3 ebenfalls zwölf Werkzeuge enthält, können nur neun Schaltschritte erforderlich sein, wenn auf dem inneren Bezugskreis A Innendrehmeißel verwendet werden, deren Schneiden auf der Mittelpunktsgeraden liegen, die durch die Schneide des benachbarten Außendrehmeißels verläuft und den äußeren der Kreise tangiert, die die Innendrehmeißel darstellen.

## Patentansprüche

1. Trommelrevolverscheibe für Drehmaschinen zur Aufnahme von Außen- und Innendrehmeißeln (12, 13), die unter Einhaltung des kollisionsfreien Durchmessers (D) auf zum Scheibenmittelpunkt konzentrischen Bezugskreisen (A—C) angeordnet sind, dadurch gekennzeichnet, daß bei Anordnung der Meißel (12, 13) auf wenigstens drei Bezugskreisen (A bis C) auf dem inneren Bezugskreis (A) unter Einhaltung des kollisionsfreien Durchmessers (D) Innendrehmeißel (13), auf dem mittleren Bezugskreis (B) unter Einhaltung des kollisionsfreien Durchmessers (D) zwischen je zwei benachbarten Innendrehmeißeln (13) auf dem inneren Bezugskreis (A) ebenfalls Innendrehmeißel (13) und auf dem äußeren Bezugskreis (C) Außendrehmeißel (12) unter Einhaltung des kollisionsfreien Durchmessers (D) zwischen zwei benachbarten Innendrehmeißeln, von denen der eine auf dem inneren und der andere auf dem mittleren Bezugskreis liegt, sowie zu den benachbarten Außendrehmeißeln (12), aufnehmbar sind.

2. Trommelrevolverscheibe nach Anspruch 1, dadurch gekennzeichnet, daß auf dem inneren Bezugskreis (A) drei Innendrehmeißel (13) angeordnet sind.

3. Trommelrevolverscheibe nach Anspruch 1 oder 2, gekennzeichnet durch Außendrehmeißel-Aufnahmen, die an den für die Innendrehmeißel (13) auf dem mittleren Bezugskreis (B) liegenden Stellen einsetzbar sind.

4. Trommelrevolverscheibe nach einem der Ansprüche 1—3, dadurch gekennzeichnet, daß bei Versetzung des Mittelpunktes der eingebauten Trommelrevolverscheibe in Z-Richtung der Drehmaschine die Außendrehmeißel (12) unter Berücksichtigung der Versetzungsstrecke gegenüber der normalerweise radialen Lage geneigt angeordnet sind.

## Claims

1. Turret für lathes for holding externally-and-internally-turning chisels (12, 13), which are arranged with their collision-free diameters (D) on reference circles (A—C) concentric with the centre of the turret, characterised in that, in the arrangement of the chisels (12, 13) on at least three reference circles (A to C), internally-turning chisels (13) can be held removably on the inner reference circle (A) whilst maintaining their collison-free diameter (D), internally-turning chisels (13) can likewise be received on the middle reference circle (B) whilst maintaining their collision-free diameter between each pair of neighbouring internally-turning chisels (13) on the inner reference circle (A) and externally-turning chisels (12) can be received on the outer reference circle (C) whilst maintaining their collision-free diameter between two neighbouring internally-turning chisels, one of which internally-turning chisels lies on the inner reference circle and the other lies on the middle reference circle, as well as with the neighbouring externally-turning chisels (12).

2. Turret according to claim 1, characterised in that three internally-turning chisels (13) are arranged on the inner reference circle (A).

3. Turret according to claim 1 or 2, characterised in that, when holding externally-turning chisels, the positions for the internally-turning chisels (13) on the middle reference circle (B) are adjustable.

4. Turret according to any of claim 1 to 3, characterised in that, when displacing the middle point of the installed turret in the Z-direction of the lathe, the externally-turning chisels (12) are arranged, with regard to the extent of displacement, so as to be inclined with respect to the normal radial position.

## Revendications

1. Tourelle révolver pour tours destinée à recevoir des outils de tours (12, 13) pour tournage extérieur et intérieur qui sont disposés, en respectant le diamètre (D) sans collision, sur des cercles de référence (A à C) concentriques à la tourelle, caractérisée en ce que, les outils (12, 13) étant disposés sur au moins trois cercles de référence (A à C), on peut monter des outils de tournage intérieur (13) sur le cercle de référence intérieur (A), en respectant le diamètre sans collision (D); également des outils de tournage intérieur (13) sur le cercle de référence moyen (B) en respectant le diamètre sans collision (D) entre deux outils de tournage intérieur voisins (13) situés sur le cercle de référence intérieur (A); et des outils de tournage extérieur (12) sur le cercle de référence extérieur (C) en respectant le diamètre sans collision (D) entre deux outils de tournage intérieur voisins, dont l'un se trouve sur le cercle de référence intérieur et l'autre sur le cercle de référence moyen, ainsi que vis-à-vis des outils de tournage extérieur voisins (12).

2. Tourelle révolver selon la revendication 1, caractérisée en ce que trois outils de tournage intérieur (13) sont disposés sur le cercle de référence intérieur (A).

3. Tourelle révolver selon la revendication 1 ou 2, caractérisée par des logements d'outils de tournage extérieur qui peuvent être montés dans les régions situées sur le cercle de référence moyen (B) pour les outils de tournage intérieur (13).

4. Tourelle révolver selon l'une des revendications 1 à 3, caractérisée en ce que, si l'on décale le centre de la tourelle révolver montée dans la direction (Z) du tour, les outils de tournage extérieur (12) sont montés inclinés par rapport à la position normalement radiale pour tenir compte de la distance de décalage.

0 075 321

FIG. 1

FIG. 2

FIG. 3

FIG. 4